# EUROPÄISCHE PATENTSCHRIFT

(11) **EP 2 503 372 B1**
(45) Veröffentlichungstag und Bekanntmachung des Hinweises auf die Patenterteilung: **11.11.2020**
(21) Anmeldenummer: 11007582.7
(22) Anmeldetag: 16.09.2011
(51) Int. Cl.: G02B 7/182

(54) **Halterung für ein optisches Bauteil**
Holding system for an optical component
Support pour un composant optique

(30) Priorität: 23.03.2011 DE 102011014876
(43) Veröffentlichungstag der Anmeldung: 26.09.2012
(73) Patentinhaber: Fraunhofer-Gesellschaft zur Förderung der angewandten Forschung e.V., 80686 München (DE)
(72) Erfinder: Krüger, Steffen, Dipl.-Ing., 50937 Köln (DE)
(74) Vertreter: Pfenning, Meinig & Partner mbB

(56) Entgegenhaltungen:
- EP-A2- 1 182 485
- WO-A1-2005/111687
- DE-A1- 19 500 613
- US-A1- 2001 000 130

## Beschreibung

Die Erfindung betriff eine Halterung für ein optisches Bauteil, die eine präzise Justage des optischen Bauteils mit geringen translatorischen Anteilen ermöglicht. Hierzu weist die Halterung zumindest zwei Elemente auf, die über ein Festkörpergelenk verbunden sind, wobei das Festkörpergelenk mittig in einem zwischen den Elementen ausgebildeten Spalt angeordnet ist.

Im Folgenden soll der technologische Hintergrund der Erfindung kurz dargestellt werden. In optischen Aufbauten müssen normalerweise optische Komponenten gleichzeitig gehalten und justiert werden. Dabei erfolgt die Justage normalerweise in zwei senkrecht aufeinanderstehenden Achsen. Eine derartige Justage ist insbesondere bei reflektierenden Bauteilen wie Spiegeln, Strahlteilerplatten, Strahlteilerwürfeln und Umlenkprismen erforderlich.

Aus dem Stand der Technik sind verschiedene Prinzipien bekannt, nach denen justierbare Halter für optische Komponenten aufgebaut sein können. So kann beispielsweise ein Bauteil, z.B. eine Platte, für eine Fixierung auf einem tragenden System, etwa einem optischen Tisch, vorgesehen sein. Über federnde Elemente, wie Zug-, Druck- oder Blattfedern, einen Auflagepunkt und zwei Stellschrauben wird ein zweites Bauteil, z.B. wiederum eine Platte, an der ersten Platte verstellbar befestigt. Diese zweite Platte trägt dann das optische Bauteil.

Die Halterungen des Standes der Technik sind normalerweise deutlich größer als die zu bewegende Optik und aus einer Vielzahl von Einzelteilen aufgebaut, was die Montage erschwert. Miniaturisierbarkeit ist häufig nur begrenzt möglich.

Bei den optischen Halterungen des Standes der Technik liegt üblicherweise die Achse, um die die Halterung bei Justage bewegt wird, weit außerhalb der optischen Mitte, was beim Verstellen zu einer überlagerten longitudinalen Verschiebungskomponente führt. Das heißt, dass das optische Element beim Verstellen entlang seiner Flächennormalen wandert.

Darüberhinaus weisen die Aufbauten des Standes der Technik keine mechanische Begrenzung der Bewegung um die einzelnen Achsen auf, so dass es durch das Betätigen der Stellschrauben zu einem Überschreiten der Elastizitätsgrenze von elastischen Elementen kommen kann.

Auch sind die Halterungen nach dem Stand der Technik normalerweise nicht in eine Gehäusewand oder eine Platte mit einer Bohrung integrierbar.

Die EP 1 182 485 A2 beschreibt eine Vorrichtung zum Verstellen der Lage zweier Bauträgerelemente für optische Elemente für Spiegel oder Linsen als Axial- und/oder Winkel-Manipulator für Lithografie-Objektive. Die Trägerelemente sind über eine Krafteinwirkung zueinander verstellbar. Jedes der Trägerelemente weist wenigstens drei Gelenke auf. Jedes der Gelenke des einen Trägerelementes ist über jeweils ein Hebeelement mit jeweils einem korrespondierenden Gelenk des jeweils anderen Trägerelementes zu einem Gelenkpaar verbunden. Jedes der Gelenkpaare ist über jeweils wenigstens einen Hebel und jeweils wenigstens ein weiteres Gelenk mit dem wenigstens einen Hebel wenigstens eines der benachbarten Gelenkpaare verbunden.

Aufgabe der vorliegenden Erfindung ist es daher, eine Halterung für optische Komponenten anzugeben, die vorteilhafterweise eine getrennte Einstellbarkeit von zwei orthogonalen Kippachsen in einem kleinen Winkelbereich (z.B. < 5°) erlaubt, dabei eine möglichst kleine überlagerte longitudinale Verschiebungskomponente beim Verstellen der Achsen aufweist und darüberhinaus kompakt realisierbar ist, was bedeutet, dass die Halterung möglichst nicht wesentlich größer sein sollte als das zu bewegende optische Bauteil.

Darüberhinaus sollte vorteilhafterweise die Möglichkeit einer selbständigen Rückkehr in die mechanische Nullstellung gegeben sein, um die Justierung zu vereinfachen. Vorteilhafterweise sollte außerdem die Möglichkeit einer Festklemmung der Achsen gegeben sein, und die Halterung sollte frei skalierbar und insbesondere miniaturisierbar sein. Auch sollten vor teilhaft mechanische Beschädigungen im Betrieb sicher vermieden werden. Die Zahl der Einzelkomponenten sollten zugunsten einer einfachen Fertigungsmontage der Halterung möglichst gering gehalten werden. Die Geometrie der Halterung sollte eine gute Integrierbarkeit in optische Module gestatten, beispielsweise ein einfaches Einsetzen und/oder Austauschen von außen durch Einsetzen in eine Bohrung einer Gehäusewand oder Platte. Die Halterung sollte vorteilhaft auch im eingesetzten Zustand eine Justierung von außen erlauben.

Die genannten Aufgaben werden gelöst durch die Halterung für ein optisches Bauteil nach Anspruch 1 sowie das Verfahren zur Herstellung einer Halterung für ein optisches Bauteil nach Anspruch 15. Die abhängigen Ansprüche geben vorteilhafte Weiterbildungen der erfindungsgemäßen Halterung für ein optisches Bauteil an.

Erfindungsgemäß wird eine Halterung für ein optisches Bauteil angegeben, die ein Basiselement und zumindest ein erstes Verstellelement aufweist. Das Basiselement ist mit dem Verstellelement über zumindest ein Festkörpergelenk verbunden, also ein Gelenk, das mit dem Basiselement und dem Verstellelement fest verbunden ist und eine Bewegung des Basiselementes gegenüber dem Verstellelement aufgrund der Elastizität seines Materials erlaubt.

Zwischen dem Basiselement und dem ersten Verstellelement ist erfindungsgemäß ein Spalt ausgebildet, der von dem Festkörpergelenk durchbrochen wird bzw. in dem das Festkörpergelenk angeordnet ist. Wird im Folgenden von Elementen gesprochen, so bezieht sich dies auf das Basiselement und alle gegebenen Verstellelemente in gleicher Weise. Unter einem Spalt wird hier eine schmale längliche Öffnung verstanden, also ein freier Bereich zwischen den beiden benachbarten Elementen, der durch einander zugewandte Oberflächen der beiden Elemente begrenzt wird. Dabei ist die Öffnung in Richtung parallel zu den Oberflächen ausgedehnter als senkrecht zu den Oberflächen. Das heißt, die Breite des Spaltes ist kleiner als die Fläche des Spaltes. Bevorzugterweise sind die den Spalt begrenzenden Oberflächen der Elemente zueinander parallel, dies ist jedoch nicht unbedingt notwendig. Die genannten Oberflächen können sich in einer Ebene erstrecken, sie können aber auch bereichsweise von einer solchen Ebene abweichen. Vorteilhafterweise haben einander gegenüberliegende, den Spalt begrenzende Oberflächen die gleichen Abmessungen, so dass ihre Ränder nebeneinander parallel zueinander verlaufen.

Das Festkörpergelenk ist zwischen den zwei benachbarten Elementen so angeordnet, dass ein Drehpol des Festkörpergelenks eine Symmetrieachse schneidet, um die eines oder beide der den entsprechenden Spalt begrenzenden Elemente zumindest bereichsweise eine Rotationssymmetrie um zumindest einen Winkel aufweisen.

Unter einem Drehpol wird hierbei ein Punkt oder eine Achse verstanden, in der eine Verlängerung der Schenkel des Festkörpergelenkes sich in jeder Auslenkung des Festkörpergelenks schneiden. Der Drehpol ist also jener Punkt oder jene Achse, um welche die Schenkel des Festkörpergelenks und damit die durch das Festkörpergelenk verbundenen Elemente tatsächlich gedreht werden.

Erfindungsgemäß weist zumindest eines der Elemente der erfindungsgemäßen Halterung eine Rotationssymmetrie um zumindest einen Winkel auf. Dass die Symmetrie bereichsweise vorliegt, bedeutet, dass sie in zumindest einem Abschnitt entlang der Symmetrieachse besteht. Hat das entsprechende Basiselement oder Verstellelement in einem solchen Bereich beispielsweise eine quadratische Querschnittsfläche, so hat es in diesem Bereich eine Rotationssymmetrie um vier Winkel, nämlich 90°, 180°, 270° und 360°. Hat das entsprechende Element in diesem Bereich eine kreisförmige Querschnittsfläche, so liegt eine Rotationssymmetrie um jeden Winkel um die Symmetrieachse vor.

Elemente mit kreisförmigem Querschnitt haben den Vorteil, dass sie als Drehteile oder aus Drehteilen herstellbar sind. Hierbei kann die Drehachse beim Drehen mit der Symmetrieachse identisch sein.

Erfindungsgemäß schneidet nun diese Symmetrieachse den Drehpol des Festkörpergelenks, das das entsprechende Element mit dem benachbarten Element verbindet. Hierdurch wird erreicht, dass der longitudinale Versatz einer optischen Fläche, die an dem Verstellelement angeordnet ist, bei einer Justage um den Drehpol minimal ist.

Bevorzugterweise weist die erfindungsgemäße Halterung neben dem genannten Basiselement zwei Verstellelemente auf, wobei das erste Verstellelement mit dem Basiselement wie vorstehend beschrieben über das erste Festkörpergelenk verbunden ist. Das erste Verstellelement ist mit dem weiteren Verstellelement über ein weiteres Festkörpergelenk verbunden, wobei auch hier zwischen dem ersten Verstellelement und dem weiteren Verstellelement ein Spalt ausgebildet ist, in dem das weitere Festkörpergelenk angeordnet ist bzw. der von dem weiteren Festkörpergelenk durchbrochen wird. Auch hier schneidet ein Drehpol des weiteren Festkörpergelenkes eine Symmetrieachse, um die das erste Verstellelement und/oder das weitere Verstellelement zumindest bereichsweise eine Rotationssymmetrie um zumindest einen Winkel aufweisen. Alle vorstehend zum Basiselement und dem ersten Festkörpergelenk sowie deren Verbindung miteinander gemachten Aussagen können analog auch für das erste Verstellelement und das weitere Verstellelement realisiert sein.

Bevorzugterweise steht der Drehpol des ersten Festkörpergelenks senkrecht zum Drehpol des zweiten Festkörpergelenks. Auf diese Weise erlaubt die erfindungsgemäße Halterung eine unabhängige Justage um zwei Achsen. Die Festkörpergelenke können besonders vorteilhaft als Fläche ausgestaltet sein, die durch die Symmetrieachse geschnitten wird. Die Symmetrieachse kann dabei die Fläche des Festkörpergelenks durchstoßen oder in dieser Fläche verlaufen. Besonders bevorzugt steht das derartige flächige Festkörpergelenk mit seiner Fläche parallel zur entsprechenden Symmetrieachse oder senkrecht auf der entsprechenden Symmetrieachse.

Das Festkörpergelenk ist in seiner Dicke, Länge senkrecht zur Symmetrieachse und Breite in Richtung der Symmetrieachse so bemessen, dass es eine gewünschte Federkonstante für die Bewegung der beiden durch das Festkörpergelenk verbundenen Elemente aufweist.

Beispielsweise können die Festkörpergelenke eine Dicke von ≥ 0,1 mm, vorzugsweise ≥ 0,3 mm und/oder ≤ 1 mm, vorzugsweise ≤ 0,8 mm, vorzugsweise ≤ 0,6 mm, besonders bevorzugt von ca. ≤ 0,5 mm aufweisen und eine Länge von einigen mm, z.B. ≤ 20 cm, vorzugsweise ≤ 10 cm und/oder ≥ 1 cm, vorzugsweise ≥ 5 cm.

Ist das Festkörpergelenk parallel zur Symmetrieachse orientiert bzw. liegt die Symmetrieachse auf dem Festkörpergelenk, so wird im einfachsten Falle die Breite des Festkörpergelenks in Richtung der Symmetrieachse durch die Spaltbreite bestimmt, d.h. durch den Abstand jener den Spalt begrenzenden Oberflächen der beiden durch das entsprechende Festkörpergelenk verbundenen Elemente. Es ist jedoch vorteilhaft möglich, die Breite des Festkörpergelenks auch unabhängig von der Spaltbreite zu gestalten. Hierzu können die den Spalt begrenzenden Spaltflächen jeweils eine Vertiefung aufweisen, in der, vorzugsweise am tiefsten Punkt, das Festkörpergelenk mit dem entsprechenden Element verbunden ist. Die Breite des Festkörpergelenks in Richtung der Symmetrieachse kann dann durch die Tiefe dieser Vertiefungen bestimmt werden. Im Normalfall kann hierbei die Länge des Festkörpergelenkes die Summe der Tiefen der beiden Vertiefungen einerseits und der Spaltbreite andererseits sein. Sofern das Festkörpergelenk als längliche Fläche ausgestaltet ist, haben die Vertiefungen die Form von Rinnen, die entlang der Festkörpergelenke senkrecht zur Symmetrieachse verlaufen.

Die Festkörpergelenke können auch senkrecht zu der entsprechenden Symmetrieachse stehen. In diesem Falle liegen sie parallel zu den den Spalt begrenzenden Spaltflächen bzw. einer Ebene, in der sich der Spalt erstreckt. Besonders einfach in der Herstellung der Halterung ist hierbei eine Ausgestaltung, bei der sich der Spalt von einer Seite der Halterung in einer ersten Ebene senkrecht zur Symmetrieachse als Einschnitt in ein beide Elemente umfassendes Werkstück erstreckt. Es erstreckt sich dabei bis zu einer Tiefe in das Werkstück, die um einen Abstand a über die durch die Symmetrieachse definierte Mitte hinausreicht. Gleichzeitig erstreckt sich der Spalt von der gegenüberliegenden Seite der Halterung in einer gegenüber der vorgenannten Ebene versetzten Ebene in entgegengesetzter Richtung als Einschnitt in die Halterung. Dabei reicht der Spalt in dieser Richtung um den Abstand a über die Mitte hinaus. Hier wird also das Festkörpergelenk durch jenen Bereich gegeben, in dem sich die Einschnitte von beiden Seiten der Halterung überlappen. Das Festkörpergelenk hat also in Richtung der Einschnitte ein Breite von 2*a und seine Dicke in Richtung der Symmetrieachse ist gerade der Abstand zwischen der unteren Spaltfläche des oberen Einschnitts und der oberen Spaltfläche des unteren Einschnitts. Es sei darauf hingewiesen, dass hier die beiden Einschnitte gemeinsam den Spalt zwischen den Elementen bilden, der durch das Festkörpergelenk in zwei Teile unterteilt wird.

In allen Ausgestaltungen der erfindungsgemäßen Halterung mit flächigen Festkörpergelenken ist es bevorzugt, wenn sich das Festkörpergelenk mit seiner Fläche in Richtung senkrecht zur Symmetrieachse über die gesamte Breite der Elemente erstreckt. In diesem Fall wird der Spalt zwischen den Elementen durch das Festkörpergelenk in zwei Teile unterteilt, die somit auch als zwei Spalte angesehen werden können.

Es ist in allen Ausführungsformen der Erfindung bevorzugt, wenn die durch ein Festkörpergelenk verbundenen Elemente, also entsprechend Basiselement, erstes Verstellelement und weiteres Verstellelement, mit dem sie verbindenden Festkörpergelenk stoffschlüssig ausgebildet sind. In dieser Ausführungsform lässt sich die erfindungsgemäße Halterung besonders einfach dadurch realisieren, dass die Spalte so mittels eines materialabtragenden Verfahrens in ein Werkstück eingeschnitten werden, dass sich Basiselement und die entsprechenden Verstellelemente zusammen mit den entsprechenden Festkörpergelenken ausbilden. Besonders geeignet ist hier das Verfahren der Drahterosion.

Bevorzugterweise sind erfindungsgemäß die Spalte zwischen benachbarten Elementen durch zueinander parallele Spaltflächen begrenzt, die sich zumindest bereichsweise jeweils in einer Ebene erstrecken. Die Spaltbreite, d.h. der Abstand zwischen den Spaltflächen, kann dann so bemessen sein, dass die Elemente um den entsprechenden Drehpol gerade um einen solchen Winkel maximal drehbar sind, dass eine Elastizitätsgrenze des Festkörpergelenks nicht überschritten wird.

Grundsätzlich kann die Spaltbreite jedoch beliebig gewählt werden. Zur Begrenzung der maximalen Auslenkung des Festkörpergelenks können dann im Spalt ein oder mehrere Anschläge vorgesehen sein, die so voneinander beabstandet sind, dass sie die Drehung entsprechend begrenzen.

Erfindungsgemäß ist das erste oder gegebenenfalls das weitere Verstellelement als Halteelement für ein optisches Element ausgebildet. Das Halteelement ist dabei jenes Verstellelement, das vom Basiselement den größten Abstand hat. Ist also nur ein Verstellelement vorgesehen, so ist dies das Halteelement. Ist außerdem ein weiteres Verstellelement vorgesehen, das über ein Festkörpergelenk mit dem ersten Verstellelement verbunden ist, so ist dieses das Halteelement.

In einer vorteilhaften Ausgestaltung der Erfindung weist das Halteelement eine dem Basiselement abgewandte Oberfläche auf, die gegenüber der Symmetrieachse um einen Winkel geneigt ist. Der Winkel beträgt z.B. 45°. Hierbei kann vorteilhaft das flächige Festkörpergelenk, durch das das Halteelement angebunden ist, mit seinem Drehpol senkrecht zu einer Ebene orientiert sein, die durch die Symmetrieachse und die Normale der geneigten Fläche aufgespannt wird.

Die Abschrägung kann vorteilhaft einen Winkel von 0 bis über 45° gegenüber der Ebene des Spaltes aufweisen. Bei Winkeln über 45° wird die Winkelablenkung des Strahls durch das Festkörpergelenk, dessen Drehpol in der durch die Symmetrieachse und die Normale der geneigten Fläche aufgespannten Ebene liegt, immer kleiner und wird bei 90° vollständig unterdrückt, da sich in diesem Falle beispielsweise eine spiegelnde Fläche nur noch coplanar zu sich selbst bewegt. Es ist also kein Kippanteil mehr vorhanden. Daher ist es bevorzugt, wenn die Winkel der spiegelnden Fläche zu einer Ebene senkrecht zur Symmetrieachse ≤ 45° sind.

Besonders vorteilhaft ist es im Falle einer solchen geneigten Fläche, wenn diese Fläche mit ihrem Rand direkt an den Spalt angrenzt, also eine Kante der Spaltfläche des Halteelementes berührt. Auf diese Weise ist der Abstand des optischen Elementes vom Drehpol minimal, so dass die Translationsbewegung beim Justieren minimal ist.

Alternativ kann der Frontbereich, an welchem die zu haltenden optischen Elemente anordenbar sind, beliebig an die zu haltenden Optiken und Strahlverhältnisse angepasst sein.

Sofern das zu haltende optische Element beispielsweise ein Strahlteiler ist, kann im Halteelement auch eine Querbohrung eingebracht sein, deren Bohrungsachse vorteilhaft senkrecht zur Symmetrieachse steht und in einer Ebene verläuft, die senkrecht zur abgeschrägten Fläche steht.

Sofern neben dem Basiselement wie vorstehend beschrieben das erste Verstellelement und das weitere Verstellelement mit zueinander senkrechten Drehpolen vorgesehen sind, ist es bevorzugt, wenn das erste Verstellelement in Richtung der Symmetrieachse eine möglichst kleine Dicke aufweist. Auf diese Weise ist auch der Abstand des vom optischen Element entfernteren Drehpols zum optischen Element möglichst gering, so dass die Translationsbewegung beim Justieren minimal ist.

Zur Justierung eines an der erfindungsgemäßen Halterung angeordneten optischen Elementes gegenüber einer Basis, an der das Basiselement fest angeordnet ist, wird auf das erste Verstellelement und ggf. das zweite Verstellelement eine Verstellkraft ausgeübt, der die elastische Kraft der Festkörpergelenke entgegenwirkt. In einer vorteilhaften Ausgestaltung der Erfindung kann eine solche Kraft mittels Schrauben auf die Verstellelemente ausgeübt werden, die an jene dem Basiselement zugewandten Spaltflächen des entsprechenden Verstellelementes anstoßen.

Um eine Justierung des optischen Elementes von einer dem optischen Element abgewandten Seite des Basiselementes zu ermöglichen, können sich diese Schrauben von jener dem optischen Element abgewandten Seite des Basiselementes durch das Basiselement hindurch bis zur entsprechenden Spaltfläche erstrecken. Hierzu weist das Basiselement entsprechende Bohrungen auf, durch welche die Schrauben hindurchgeführt werden können. Um eine Justierung des weiteren Verstellelementes von der Rückseite des Basiselementes aus zu ermöglichen, weist vorteilhaft außerdem das erste Verstellelement Bohrungen auf, die sich durch das erste Verstellelement hindurch erstrecken und durch welche hindurch Schrauben geführt sein können, die an die dem Basiselement zugewandte Spaltfläche des weiteren Verstellelementes anstoßen. Diese Bohrungen im ersten Verstellelement korrespondieren zu entsprechenden Bohrungen im Basiselement mit gleicher Bohrungsachse.

Zur Einstellung des ersten Verstellelementes kann der Basisbereich für jede der genannten Schrauben Bewegungs- und Klemmgewinde aufweisen. Für die Justierung des weiteren Verstellelementes kann das Basiselement eine der Zahl der hierzu eingesetzten Schrauben entsprechenden Zahl von Freibohrungen für die Gewinde dieser Drehachse aufweisen. Die Bewegungs- und Klemmgewinde für die Bewegung des weiteren Verstellelementes befinden sich dann in Verlängerung der Freibohrungen im ersten Verstellelement. Allgemein befindet sich also das Gewinde für Schrauben zur Einstellung eines der Elemente im unmittelbar darunterliegenden Element. Für das weitere Verstellelement ist dieses das erste Verstellelement und für das erste Verstellelement ist dieses das Basiselement. Die Schrauben für das weitere Verstellelement erstrecken sich im Basiselement durch Freibohrungen und greifen in Gewinde im ersten Verstellelement ein.

Lage und Größe der Bohrungen und Gewinde können in gewissen Grenzen variiert werden, ohne die Funktion zu beeinträchtigen. Vorteilhaft ist jedoch, wenn zwei ein Verstellelement in unterschiedliche Richtungen bewegende Schrauben relativ zum entsprechenden Festkörpergelenk einander symmetrisch gegenüberliegen.

Es ist darüberhinaus auch möglich, weitere Gewinde und Schrauben hinzuzufügen, um so z.B. einstellbare Anschläge und Klemmungen hinzuzufügen.

Je zwei Schrauben können für ein Gelenk zuständig sein, wobei das Bewegen des entsprechenden Verstellelementes durch Lösen einer Schraube und anschließendes Verstellen der gegenüberliegenden Schraube erfolgt. Eine Festklemmung erfolgt dann durch Anziehen der wiederum anderen Schraube. Sofern sich hierdurch der Halter etwas verstellt, kann dies durch erneutes geringfügiges Anziehen der gegenüberliegenden Schraube kompensiert werden. Danach ist die Stellung des Gelenkes fixiert und stabil. Um eine leichtere Einsetzbarkeit der erfindungsgemäßen Halterung in eine Basis zu ermöglichen, können die Verstellelemente gegenüber dem Basiselement etwas abgesetzt sein, also einen etwas kleineren Durchmesser bzw. etwas kleinere Abmessungen in Richtung senkrecht zur Symmetrieachse aufweisen.

Die Schrauben können beispielsweise Madenschrauben sein, mit denen die entsprechenden Achsen verstellbar und verklemmbar sind.

Neben Madenschrauben können auch andere Schrauben und Gewinde, wie etwa Feingewinde oder bei größeren Haltern Rändelschrauben, eingesetzt werden.

Vorteilhafterweise sind die Festkörpergelenke so ausgestaltet und angeordnet, dass sie sich bei Abwesenheit äußerer Kräfte in eine Ausgangsposition einstellen, in der vorteilhaft die Symmetrieachsen der durch das entsprechende Festkörpergelenk verbundenen Elemente auf einer gemeinsamen Geraden liegen. Die erfindungsgemäße Halterung ist in diesem Falle also selbstzentrierend.

Zur Befestigung der erfindungsgemäßen Halterung an einer Basis kann das Basiselement vorteilhaft einen Flansch aufweisen, der über den Körper des Basiselementes hinaussteht. Durch diesen Flansch sind beispielsweise Schrauben in die Basis einschraubbar.

In einer besonders vorteilhaften Ausgestaltung kann der Flansch mit einer Nut von seinem Rand aus radial bzw. senkrecht zum Rand eingeschnitten sein. Auf diese Weise kann die erfindungsgemäße Halterung an einer Basis anbringbar sein, ohne dass eine Justierung in einem Winkelfreiheitsgrad um die Symmetrieachse erforderlich wäre. Hier ist an der Basis an definierter Stelle ein Pin angeordnet, der in die Nut im Flansch eingreift und dadurch den Rotationsfreiheitsgrad festlegt.

Das Basiselement kann auch ohne Flansch als beispielsweise reiner Zylinder oder reiner Quader ohne Endplatte ausgestaltet sein und in einer Bohrung radial geklemmt werden oder in seiner dem optischen Element abgewandten Basisfläche Gewindebohrungen aufweisen, mit welchen das Basiselement durch das aufnehmende Bauteil hindurch festgeschraubt werden kann.

Die erfindungsgemäße Halterung lässt sich in einer kompakten Bauweise mit guter Skalierbarkeit in Richtung Miniaturisierung realisieren. Darüberhinaus kann eine selbständige Rückkehr in die mechanische Nullstellung realisiert werden. Durch inhärente Endanschläge können Beschädigungen verhindert werden. Die erfindungsgemäße Halterung ist mit einer geringen Zahl von Einzelteilen realisierbar und gut in optische Module integrierbar.

Im Folgenden soll die Erfindung anhand einiger Figuren beispielhaft erläutert werden. Die in den .Figuren gezeigten Merkmale können auch unter verschiedenen Beispielen kombiniert werden und unabhängig vom konkreten Beispiel realisiert sein.

Gleiche Bezugszeichen kennzeichnen gleiche oder entsprechende Merkmale.
- Fign. 1A bis H: zeigen ein erstes Ausführungsbeispiel einer erfindungsgemäßen Halterung für ein optisches Bauteil,
- Fign. 2A bis I: zeigen ein zweites Ausführungsbeispiel einer erfindungsgemäßen Halterung für ein optisches Bauteil,
- Fign. 3A bis H: zeigen ein drittes Ausführungsbeispiel einer erfindungsgemäßen Halterung für ein optisches Bauteil,
- Fign. 4A bis I: zeigen ein viertes Ausführungsbeispiel einer erfindungsgemäßen Halterung für ein optisches Bauteil,
- Fig. 5: ein Beispiel einer alternativen Ausgestaltung eines Festkörpergelenkes zum Einsatz in der vorliegenden Erfindung und
- Fig. 6: eine alternative Ausgestaltung eines zwei Elemente trennenden Spalts mit einem Festkörpergelenk.
1 Basiselement
2 Erstes Verstellelement
3 Weiteres Verstellelement
4 Erstes Festkörpergelenk
5 Weiteres Festkörpergelenk
6 Aufnahmefläche für optische Elemente
7 Flansch
8 Nut
9a, 9b Freibohrungen
10a, 10b Gewinde
11a, 11b Gewinde
12a, 12b, 12c Bohrungen
13 Querbohrungen
14 Abstufungen
15 Drehpol
16 Spalt
17 Spalt
18 Symmetrieachse

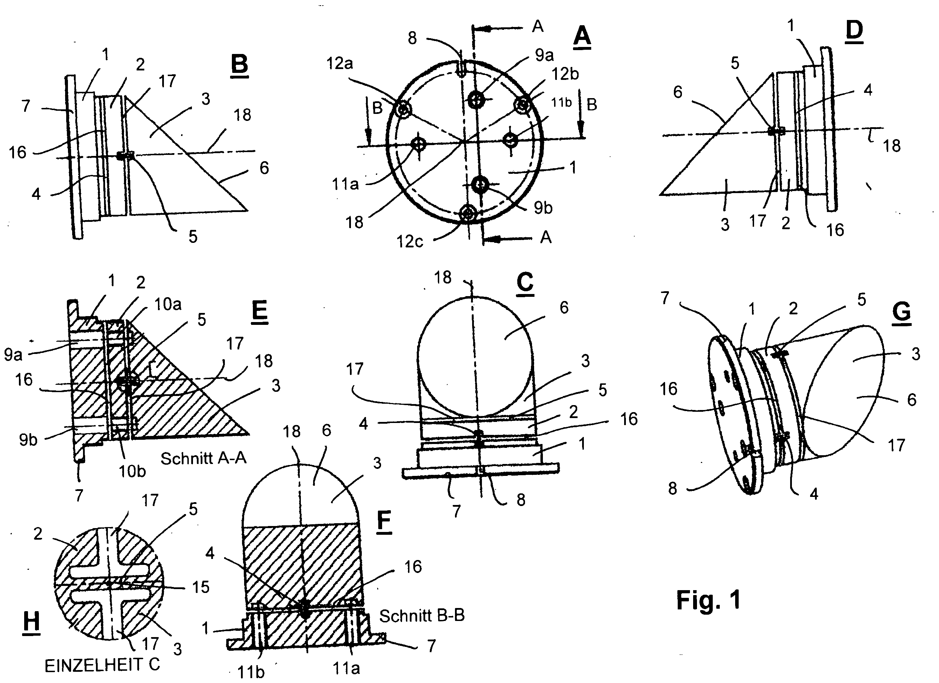

Figur 1 zeigt ein erstes Ausführungsbeispiel einer Halterung für ein optisches Bauteil gemäß der vorliegenden Erfindung. Dabei zeigt Teilfigur A eine Ansicht von unten auf ein Basiselement 1 der erfindungsgemäßen Halterung, Figur B eine linke Seitenansicht der erfindungsgemäßen Halterung gemäß Teilfigur A, Teilfigur C eine Vorderansicht der erfindungsgemäßen Halterung gemäß Teilfigur A und Teilfigur D eine rechte Seitenansicht der erfindungsgemäßen Halterung gemäß Teilfigur A. Teilfigur E zeigt einen Schnitt entsprechend der Schnittlinie A-A in Teilfigur A und Teilfigur F zeigt einen Schnitt entlang der Schnittlinie B-B in Teilfigur A. Teilfigur H zeigt eine Ausschnittsvergrößerung eines Festkörpergelenks in Teilfigur E. Teilfigur G zeigt eine perspektivische Ansicht der erfindungsgemäßen Halterung für ein optisches Bauteil entsprechend diesem Ausführungsbeispiel.

Die in Figur 1 gezeigte optische Halterung weist ein Basiselement 1, ein erstes Verstellelement sowie ein weiteres Verstellelement 3 auf. Das zweite Verstellelement 3 ist zugleich ein Halteelement für ein optisches Bauteil. Das Basiselement 1 ist mit dem ersten Verstellelement 2 über ein erstes Festkörpergelenk 4 verbunden. Dabei ist zwischen Basiselement 1 und dem ersten Verstellelement 2 ein Spalt 16 ausgebildet, in dem das erste Festkörpergelenk 4 angeordnet ist.

Hierbei ist ein Drehpol 15 des Festkörpergelenks 4 so angeordnet, dass er eine Symmetrieachse 18 schneidet, um die das Basiselement 1 und das erste Verstellelement 2 rotationssymmetrisch sind. Das Basiselement 1 und das erste Verstellelement 2 haben in einer Ebene senkrecht zur Symmetrieachse 18 einen kreisförmigen Querschnitt, so dass die Rotationssymmetrie für beliebige Rotationswinkel um die Symmetrieachse 18 gegeben ist.

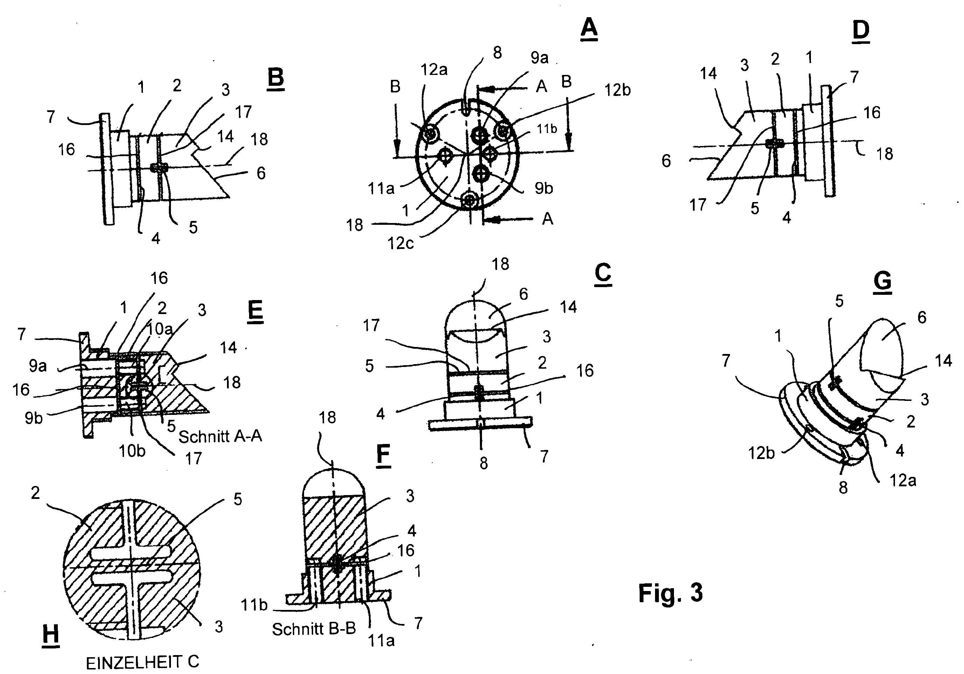

Das erste Verstellelement 2 ist nun mit dem weiteren Verstellelement 3 über ein weiteres Festkörpergelenk 5 verbunden. Auch hier ist zwischen dem ersten Verstellelement 2 und dem zweiten Verstellelement 3 ein Spalt ausgebildet, in dem das Festkörpergelenk 5 angeordnet ist. Ein Drehpol des Festkörpergelenks 5 schneidet seinerseits die Symmetrieachse 18, die auch Symmetrieachse des ersten Verstellelements 2 ist. In Figur 1 weist das weitere Verstellelement 3 beispielhaft eine abgeschrägte Fläche 6 zur Aufnahme eines optischen Elementes auf. Ein Rand der abgeschrägten Fläche 6 schneidet einen Rand des Spaltes 17 zwischen dem ersten Verstellelement 2 und dem weiteren Verstellelement 3. Durch diese Ausgestaltung weist das weitere Verstellelement 3 in diesem Beispiel an keiner Stelle eine Rotationssymmetrie um die Symmetrieachse 18 auf. Es kann aber aus einem rotationssymmetrischen Teil hergestellt sein. Wie im in Figur 3 gezeigten Beispiel kann jedoch das weitere Verstellelement 3 einen rotationssymmetrischen Teil aufweisen, der sich entlang der Symmetrieachse 18 bis auf Höhe des dem Basiselement 1 zunächst liegenden Punktes des Randes der Aufnahmefläche 6 erstreckt.

Beide Festkörpergelenke 4 und 5 sind im gezeigten Beispiel als Fläche ausgestaltet, wobei die Fläche des jeweiligen Festkörpergelenks 4 und 5 durch die Symmetrieachse 18 geschnitten wird. Dies ist in Figur 1B und 1D für das zweite Festkörpergelenk 5 zu erkennen und in den Figuren 1C und 1F für das erste Festkörpergelenk 4.

Im gezeigten Beispiel hat die Fläche der Festkörpergelenke 4 und 5 eine längliche Form mit einer sich senkrecht zur Symmetrieachse 18 erstreckenden Längsrichtung. In dieser Längsrichtung erstrecken sich die Festkörpergelenke 4 und 5 über eine gesamte Breite des jeweiligen Spalts 16 bzw. 17, in dem sie angeordnet sind und stehen senkrecht zueinander.

Ein Schnitt durch das Festkörpergelenk 5 ist in Figur 1H als Vergrößerung aus Figur 1E gezeigt. Das Festkörpergelenk 5 ist hierbei eine Fläche, die sich zwischen dem ersten Verstellelement 2 und dem Halteelement 3 erstreckt und mit ihrer Fläche senkrecht auf einer Ebene steht, in der sich der Spalt 17 erstreckt und parallel liegt zu Spaltflächen des ersten Verstellelements 2 und des weiteren Verstellelements 3, die den Spalt 17 begrenzen.

Eine Federkonstante des Festkörpergelenks 5 wird durch dessen Bemessung in Abhängigkeit von seinem Material bestimmt. Im gezeigten Beispiel ist das Festkörpergelenk 5 aus demselben Material gestaltet wie das erste Verstellelement 2 und das weitere Verstellelement 3. Um das Festkörpergelenk 5 unabhängig von einer Spaltbreite des Spaltes 17, d.h. einem Abstand zwischen jener den Spalt 17 begrenzenden Spaltfläche des Verstellelements 2 und jener Spaltfläche des weiteren Verstellelements 3, beliebig einstellen zu können, ist es mit dem ersten Verstellelement 2 und dem weiteren Verstellelement 3 jeweils in einer Vertiefung bzw. Rinne in der jeweiligen Spaltfläche des entsprechenden Elements 2 bzw. 3 verbunden. Je tiefer die entsprechende Vertiefung bzw. Rinne ist, desto breiter kann das Festkörpergelenk in Richtung der Symmetrieachse 18 ausgeführt werden und umso kleiner kann seine Federkonstante eingestellt werden. Im gezeigten Beispiel ist die Länge des Festkörpergelenks 5 gerade die Spaltbreite des Spaltes 17 zusammen mit der Tiefe der Vertiefung in der Spaltfläche des ersten Verstellelements 2 und der Tiefe der Vertiefung in der Spaltfläche des weiteren Verstellelements 3. Die Vertiefung ist im gezeigten Beispiel als Rinne ausgestaltet, deren Längsrichtung parallel zur Längsrichtung des Festkörpergelenks 5 verläuft.

Alle vorstehend zum Festkörpergelenk 5 gemachten Aussagen gelten für das Festkörpergelenk 4 zwischen Basiselement 1 und erstem Verstellelement 2 in analoger Weise, wobei das Basiselement 1 die Rolle des ersten Verstellelements 2 einnimmt und das erste Verstellelement 2 die Rolle des weiteren Verstellelements 3 in obiger Beschreibung.

Im gezeigten Beispiel sind das erste Verstellelement 2 und das zweite Verstellelement 3 von einer der Aufnahmefläche 6 abgewandten Seite des Basiselements 1 aus justierbar. Hierzu weisen das Basiselement 1 und das erste Verstellelement 2 Bohrungen 9a, 9b und Gewinde 10a und 10b und 11a und 11b auf, durch die Schrauben führbar sind bzw. in welche Schrauben einschraubbar sind. Die Schrauben werden von jener dem Halteelement 3 abgewandten Seite des Basiselements 1 eingeführt.

Zur Einstellung des ersten Verstellelements 2 sind im Basiselement 1 zwei Gewinde 11a und 11b vorgesehen, die symmetrisch um die Symmetrieachse 18 von jener dem Verstellelement 2 abgewandten Seite durch das Basiselement 1 eingebracht sind, wobei sich die Gewindeachsen der Gewinde 11a, 11b parallel zur Symmetrieachse 18 erstrecken. Durch die Gewinde 11a und 11b können Schrauben durch das Basiselement 1 geschraubt werden, die an jene den Spalt 16 begrenzende Spaltfläche des Verstellelements 2 anstoßen und dabei eine Kraft auf dieses Verstellelement 2 ausüben, durch welche es justierbar ist. Diese Kraftwirkung kann zu einer Auslenkung des Festkörpergelenkes 4 führen.

Zur Einstellung des Halteelementes 3 sind in das Basiselement 1 zwei Freibohrungen 9a und 9b mit zur Symmetrieachse 18 parallelen Bohrungsachsen eingebracht. Im ersten Verstellelement 2 sind in Verlängerung der Freibohrungen 9a und 9b Gewinde 10a und 10b eingebracht, die sich mit zur Symmetrieachse 18 parallelen Gewindeachsen durch das erste Verstellelement 2 erstrecken. Durch jeweils eine Freibohrung 9a und das dazugehörige Gewinde 10a ist nun eine Schraube in das Gewinde 10a einschraubbar, die an jene den Spalt 17 begrenzende Spaltfläche des Halteelementes 3 anstößt und so eine Kraft auf dieses Halteelement 3 ausübt.

Die Freibohrungen 9a und 9b sowie die Gewinde 10a und 10b sind symmetrisch zu einer das Basiselement 1 halbierenden Ebene angeordnet, die parallel zur Symmetrieachse 18 liegt und die außerdem senkrecht zur Längsrichtung des ersten Festkörpergelenks 4 liegt. Damit die Schrauben zum Verstellen des Halteelements 3 nicht durch das erste Festkörpergelenk 4 geführt werden müssen, sind die Freibohrungen 9a und 9b sowie die Gewinde 10a und 10b gegenüber einer durch die Fläche des ersten Festkörpergelenks 4 definierten Ebene versetzt, wie dies deutlich in Figur 1A zu erkennen ist.

Um die Halterung auf eine Basis aufschrauben zu können, weist das Basiselement 1 einen Flansch 7 auf, der an jener dem Halteelement 3 abgewandten Seite des Basiselementes 1 über das Basiselement 1 hinaussteht. In den Flansch 7 sind in gleichen Winkelabständen um die Symmetrieachse 18 Befestigungsbohrungen 12a, 12b und 12c eingebracht, durch welche Schrauben geführt werden können, mittels derer das Halteelement auf der Basis anschraubbar ist.

In den Flansch 7 ist außerdem eine Nut 8 eingebracht, die sich radial in Richtung der Symmetrieachse 18 erstreckt. Bei Befestigung der Halterung auf einer Basis kann in diese Nut 8 ein Stift eingreifen, der mit der Basis fest verbunden ist. Auf diese Weise kann bereits bei der Befestigung der Halterung an der Basis der Rotationsfreiheitsgrad um die Symmetrieachse 18 festgelegt werden.

Im gezeigten Beispiel weist das Halteelement 3 eine Aufnahmefläche 6 für ein optisches Element auf. Die Aufnahmefläche 6 ist gegenüber den Ebenen, in welchen sich die Spalte 16 und 17 erstrecken, um einen Winkel von z.B. 45° abgeschrägt. Ein Rand der Aufnahmefläche 6 berührt einen Rand jener den Spalt 17 begrenzenden Spaltfläche des Halteelements 3. Der Berührungspunkt zwischen dem Rand der Aufnahmefläche 6 und dem Rand der genannten Spaltfläche liegt in Richtung parallel zur Symmetrieachse 18 über jenem Punkt, in dem das erste Festkörpergelenk 4 endet. Im gezeigten Beispiel liegt außerdem der genannten Berührungspunkt in Richtung parallel zur Symmetrieachse 18 gerade oberhalb der Nut 8.

Das Halteelement kann besonders günstig als Drehteil hergestellt sein, wobei um die Symmetrieachse 18 gedreht wird. Das Halteelement kann dabei aus einem einzelnen Werkstück gedreht werden. Die Spalte 16 und 17 mit den Festkörpergelenken 4 und 5 können dann z.B. mittels Drahterodieren in das Werkstück eingeschnitten werden.

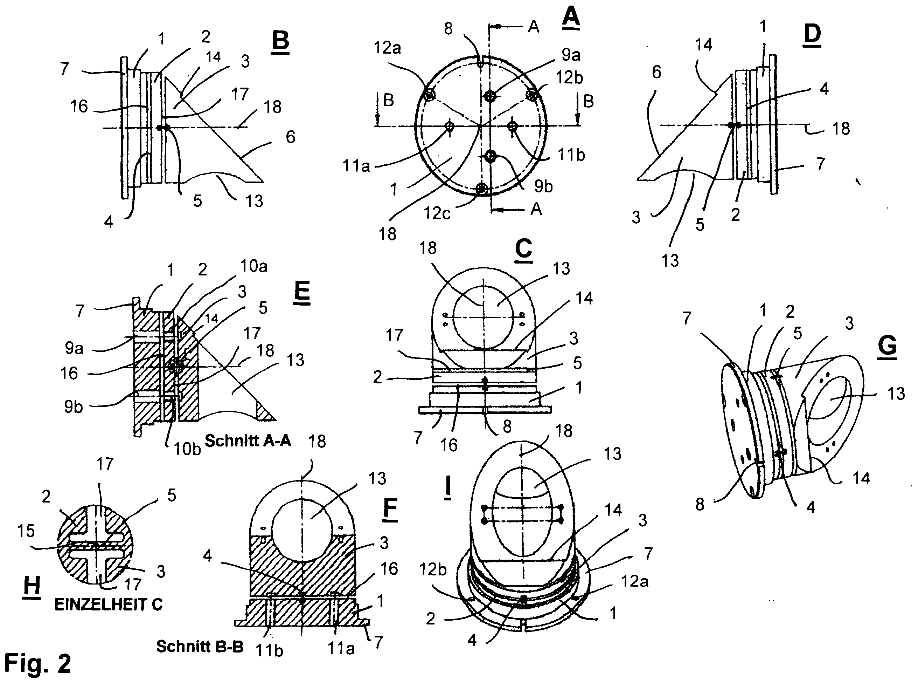

Figur 2 zeigt ein weiteres Ausführungsbeispiel einer erfindungsgemäßen Halterung. Das Ausführungsbeispiel entspricht im Wesentlichen jenem in Figur 1 gezeigten, so dass auf die Beschreibung zu Figur 1 verwiesen wird. Im Folgenden soll lediglich auf die Besonderheiten dieses Ausführungsbeispiels eingegangen werden.

Die Ansichten in Figur 2A, 2B, 2C, 2D und 2E sowie 2F und 2G und 2H entsprechen den Ansichten in Figur 1. Figur 2I zeigt eine perspektivische Ansicht in Richtung der Länge des Festkörpergelenks 4.

Wie in Figur 1 weist die Halterung 4 ein Basiselement 1, ein erstes Verstellelement 2 sowie ein Halteelement 3 auf. Basiselement 1 und erstes Verstellelement 2 sind über ein Festkörpergelenk 4 verbunden und erstes Verstellelement 2 und Halteelement 3 sind über ein weiteres Festkörpergelenk 5 verbunden. Die Festkörpergelenke 4 und 5 stehen mit ihren Längsrichtungen senkrecht zueinander.

Wie auch in Figur 1 gezeigt, weist das Halteelement 3 eine mit einem Winkel von z.B. 45° gegenüber den Spaltflächen angeschrägte Aufnahmefläche 6 auf. Die Aufnahmefläche 6 weist jedoch im Unterschied zu Figur 1 eine Stufe 14 auf, die sich länglich mit zur Symmetrieachse 18 senkrechter Richtung erstreckt. Darüberhinaus berührt ein Rand der Aufnahmefläche 6 einen Rand der den Spalt 17 begrenzenden Spaltfläche des Halteelements 3 nicht nur in einem Punkt, sondern schneidet diesen.

Darüberhinaus weist das Halteelement 3 eine Bohrung 13 mit einer zur Symmetrieachse 18 senkrecht stehenden Bohrungsrichtung auf. Die Bohrung 13 hat einen kreisförmigen Querschnitt und die Bohrungsachse erstreckt sich parallel zur Längsrichtung des Festkörpergelenks 4. Die Bohrungsachse liegt außerdem in einer Ebene, zu der die Aufnahmefläche 6 symmetrisch ist.

Die in Figur 2 gezeigte Halterung ist besonders geeignet für einen Strahlteiler als optisches Element, da ein Teil des Strahls durch die Bohrung 13 geführt werden kann.

Figur 3 zeigt ein weiteres Ausführungsbeispiel einer Halterung für ein optisches Bauteil entsprechend der vorliegenden Erfindung. Die Ansichten der Teilfiguren' A, B, C, D, E, F und G entsprechen jenen in Figur 1 gezeigten.

Die in Figur 3 gezeigte Halterung stimmt weitgehend mit jener in Figur 1 gezeigten überein. Daher soll auf die Beschreibung zu Figur 1 hier ausdrücklich verwiesen werden. Im Folgenden wird lediglich auf die Unterschiede zu Figur 1 eingegangen.

Auch in Figur 3 weist das Halteelement 3 eine gegenüber den Spaltflächen 16 und 17 um einen Winkel von z.B. 40° abgeschrägte Haltefläche 6 auf. Im Gegensatz zu Figur 1 weist die Haltefläche 6 in Figur 3 eine Stufe 14 auf, die sich in einer Richtung senkrecht zur Symmetrieachse 18 erstreckt. Darüberhinaus berührt der Rand der Haltefläche 6 jene den Spalt 17 begrenzende Spaltfläche des Halteelements 3 nicht, sondern nähert sich dieser nur bis auf einen minimalen Abstand, der im gezeigten Beispiel gerade oberhalb jenes Punktes liegt, an welchem das erste Festkörpergelenk 4 endet. Dadurch weist das Halteelement 3 einen um die Symmetrieachse 18 rotationssymmetrischen Teil auf, der gerade jener Bereich zwischen der minimalen Annäherung des Randes der Haltefläche 6 und dem Rand der genannten Spaltfläche ist.

Es sei darauf hingewiesen, dass die Aufnahmefläche 6 in den Figuren 1, 2 und 3 auch in jeder anderen Richtung orientiert sein kann, so dass der oben beschriebene Punkt minimalen Abstands an einer beliebigen Stelle entlang der Umrandung des Spalts 17 angeordnet sein kann.

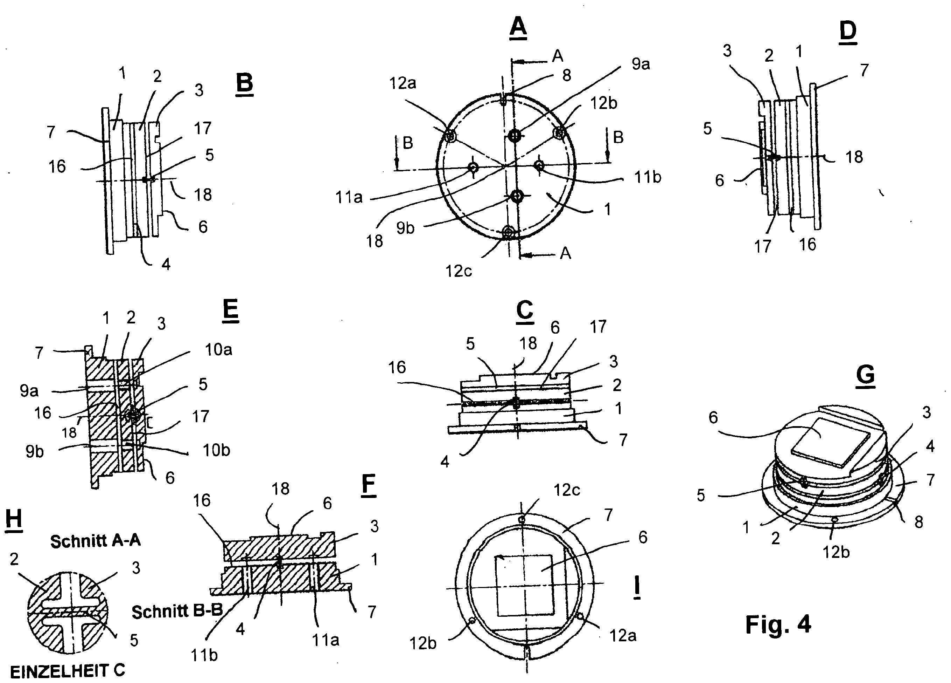

Figur 4 zeigt ein weiteres Ausführungsbeispiel einer erfindungsgemäßen Halterung für ein optisches Bauteil. Wiederum entspricht das gezeigte Beispiel dem in Figur 1 gezeigten Beispiel weitgehend, so dass auf die Beschreibung zu Figur 1 hier verwiesen wird. Im Folgenden soll lediglich auf die Unterschiede zu Figur 1 eingegangen werden. Die Teilfiguren 4A bis 4I entsprechen den Teilfiguren der Figur 2, wobei jedoch Teilfigur 4G eine etwas andere Perspektive zeigt als Teilfigur 2G.

Im Gegensatz zu den in Figuren 1, 2 und 3 gezeigten Ausführungsbeispielen ist im in Figur 4 gezeigten Beispiel die Aufnahmefläche 6 nicht gegenüber den Ebenen der Spalte 16 und 17 angeschrägt, sondern liegt zu diesen parallel. Auf der Aufnahmefläche 6 könnte beispielsweise ein Spiegel angeordnet werden, dessen Spiegelfläche dann parallel zu den Ebenen liegt, in denen sich die Spalte 16 und 17 erstrecken.

Im gezeigten Beispiel weist die Aufnahmefläche 6 eine quadratische Erhöhung auf, wobei die Symmetrieachse 18 gerade durch die Mitte des Quadrates der Erhöhung verläuft. Die Aufnahmefläche 6 weist darüberhinaus zwei Erhöhungen auf, die mit einer Kante parallel zu jeweils einer Kante der quadratischen Erhöhung liegen und mit ihrer anderen, gegenüberliegenden, Kante entlang einem Umfang des Halteelements 3 verlaufen. Jene parallel zu den Kanten des Quadrates verlaufenden Kanten dieser Erhöhungen stehen im gezeigten Beispiel senkrecht zueinander.

Die quadratische Erhöhung kann hierbei eine Auflage- und/oder Klebefläche für einen Strahlteilerwürfel sein. Die beiden im Winkel von 90° zueinander stehenden Kanten der seitlichen Erhöhungen können hierbei als seitliche Anschläge für den Positionier- und/oder Klebevorgang des Würfels dienen. Die sich zwischen diesen erhöhten Kanten und der quadratischen Fläche 6 ausbildenden Vertiefungen dienen dann zur Aufnahme des überschüssigen Klebstoffs, wenn dieser beim Andrücken des Würfels aus dem Klebespalt quillt.

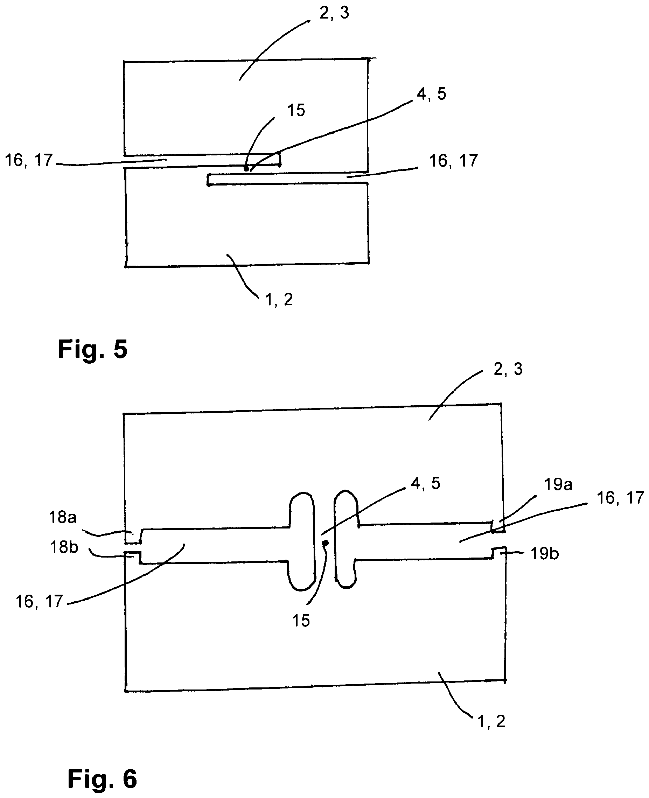

Figur 5 zeigt eine alternative Ausgestaltungsmöglichkeit eines Festkörpergelenks 4, 5, wie es in allen Ausführungsformen der Erfindung, insbesondere jenen in Figuren 1 bis 4 gezeigten, zum Einsatz kommen kann. Im Gegensatz zu den in Figuren 1 bis 4 gezeigten Festkörpergelenken steht eine Fläche, in der sich das Festkörpergelenk 4, 5 erstreckt, senkrecht zur Symmetrieachse 18 und parallel zu Spaltflächen, die den entsprechenden Spalt 16, 17 begrenzen. Derartige Festkörpergelenke sind durch materialabtragende Verfahren aus einem Grundkörper besonders günstig herstellbar, da lediglich von zwei gegenüberliegenden Seiten die Spalte 16, 17 in den Grundkörper eingeschnitten werden müssen. Die Schnittebenen sind dabei um die Dicke des Festkörpergelenkes 4, 5 gegeneinander in Richtung der Symmetrieachse versetzt.

Figur 6 zeigt eine weitere Ausgestaltung eines Spalts 16, 17 zwischen zwei benachbarten Elementen 1, 2, 3 mit einem darin angeordneten Festkörpergelenk 4, 5, das flächig ausgestaltet ist und dessen Flächenebene, wie in den Figuren 1 bis 4 gezeigt, parallel zur Symmetrieachse 18 steht, jedoch auch, wie in Figur 5 gezeigt, senkrecht zur Symmetrieachse 18 stehen könnte.

In allen Ausführungsformen ist es vorteilhaft, wenn ein Winkel maximaler Auslenkung eines gegebenen Festkörpergelenks 4, 5 durch die Spaltbreite des entsprechenden Spaltes 16, 17 begrenzt bzw. bestimmt wird. Die Spaltbreite der Spalte 16 und 17 kann jedoch beliebig gewählt werden, wenn innerhalb des Spalts 16, 17 Anschläge 18a, 18b und 19a, 19b vorgesehen sind, die bei Auslenkung des Festkörpergelenks 4, 5 um den maximalen Winkel aneinanderstoßen. Im gezeigten Beispiel sind die Anschläge 18a; 18b, 19a, 19b jeweils am äußeren Ende des entsprechenden Spalts 16, 17 angeordnet, sie können jedoch auch innerhalb des Spaltes angeordnet sein. Da eine Breite des Festkörpergelenks 4, 5 in Richtung der Symmetrieachse durch die Tiefe der Vertiefungen in den Spaltflächen eingestellt werden kann, kann die Spaltbreite in einer solchen Ausgestaltung weitgehend beliebig eingestellt werden, ohne die mechanischen Eigenschaften, d.h. Federkonstante und maximale Auslenkung zu beeinflussen.

In allen Ausführungsformen der Erfindung kann die erfindungsgemäße Halterung besonders vorteilhaft durch materialentfernende Verfahren, insbesondere durch Drahterodieren, aus einem einzelnen Werkstück hergestellt werden. Dazu werden die Spalte und ggf. Vertiefungen in den Spaltflächen von der Seite des Körpers eingeschnitten. Die Festkörpergelenke ergeben sich dann stoffschlüssig mit dem sie verbundenen Elementen 1, 2 oder 3.

**Bezugszeichenliste**

| | |
|---|---|
| 1 | Basiselement |
| 2 | Erstes Verstellelement |
| 3 | Weiteres Verstellelement |
| 4 | Erstes Festkörperelement |
| 5 | Weiteres Festkörperelement |
| 6 | Aufnahmefläche für optische Elemente |
| 7 | Flansch |
| 8 | Nut |
| 9a, 9b | Freibohrungen |
| 10a, 10b | Gewinde |
| 11a, 11b | Gewinde |
| 12a, 12b, 12c | Bohrungen |
| 13 | Querbohrungen |
| 14 | Abstufungen |
| 15 | Drehpol |
| 16 | Spalt |
| 17 | Spalt |
| 18 | Symmetrieachse |

## Patentansprüche

1. Halterung für ein optisches Bauteil mit einem Basiselement (1) und zumindest einem ersten Verstellelement (2), wobei
zwischen dem Basiselement (1) und dem ersten Verstellelement (2) ein Spalt (16) ausgebildet ist, der durch einander zugewandte Oberflächen der beiden Elemente (1, 2) begrenzt wird, **dadurch gekennzeichnet, dass**
das Basiselement (1) und das zumindest eine Verstellelement (2) über zumindest ein erstes Festkörpergelenk (4) miteinander verbunden sind, und dass der Spalt von dem ersten Festkörpergelenk (4) durchbrochen wird,
wobei ein Drehpol (15) des Festkörpergelenkes (4) eine Symmetrieachse (18) schneidet, um die das Basiselement (1) und/oder das erste Verstellelement (2) zumindest bereichsweise eine Rotationssymmetrie um zumindest einen Winkel aufweisen.

2. Halterung nach dem vorhergehenden Anspruch, **gekennzeichnet durch** zumindest ein weiteres Verstellelement (3), das mit dem ersten Verstellelement (2) über zumindest ein weiteres Festkörpergelenk (5) verbunden ist,
wobei zwischen dem ersten Verstellelement (2) und dem weiteren Verstellelement (3) ein Spalt (17) ausgebildet ist, in dem das weitere Festkörpergelenk (5) angeordnet ist,
wobei ein Drehpol des weiteren Festkörpergelenks (5) eine Symmetrieachse (18) schneidet, um die das erste Verstellelement (2) und/oder das weitere Verstellelement (3) zumindest bereichsweise eine Rotationssymmetrie um zumindest einen Winkel aufweisen.

3. Halterung nach einem der vorhergehenden Ansprüche, wobei das zumindest eine Festkörpergelenk (4, 5) als Fläche ausgestaltet ist, die durch die Symmetrieachse geschnitten wird.

4. Halterung nach dem vorhergehenden Anspruch, wobei die Fläche parallel zur entsprechenden Symmetrieachse (18) steht oder senkrecht zur entsprechenden Symmetrieachse (18) steht.

5. Halterung nach Anspruch 3 oder 4, wobei sich die Fläche des Festkörpergelenkes (5, 6) über eine gesamte Ausdehnung des entsprechenden Spaltes (16, 17) in einer Längsrichtung der Fläche senkrecht zur Symmetrieachse erstreckt.

6. Halterung nach einem der vorhergehenden Ansprüche, wobei das erste Festkörpergelenk (4) in Stoffschluss mit dem Basiselement (1) und/oder dem ersten Verstellelement (2) ist und/oder dass das weitere Festkörpergelenk (5) in Stoffschluss mit dem ersten Verstellelement (2) und/oder dem weiteren Verstellelement (3) ist.

7. Halterung nach einem der vorhergehenden Ansprüche, wobei das erste (2) oder gegebenenfalls das weitere Verstellelement (3)ein Halteelement für ein optisches Element ist.

8. Halterung nach dem vorhergehenden Anspruch, wobei das Halteelement eine dem Basiselement (1) abgewandte Oberfläche (6) aufweist, die gegenüber der Symmetrieachse um einen Winkel größer als 0° und kleiner als 90° geneigt ist, wobei vorzugsweise der Drehpol (15) des mit diesem Halteelement verbundenen Festkörpergelenks (4, 5) parallel zu dieser geneigten Oberfläche (6) verläuft und wobei besonders bevorzugt die geneigte Fläche an ihrem Rand einen Rand einer den Spalt (16, 17) begrenzenden Spaltfläche des Halteelementes berührt.

9. Halterung nach einem der vorhergehenden Ansprüche, wobei die Spalte (16, 17) so bemessen sind, dass beim Verstellen der entsprechenden Verstellelemente (2, 3) um das entsprechende Festkörpergelenk (4, 5) den entsprechenden Spalt (16, 17) begrenzende Spaltflächen aneinandersto-βen, bevor eine Elastizitätsgrenze des entsprechenden Festkörpergelenks (4, 5) erreicht ist.

10. Halterung nach einem der vorhergehenden Ansprüche, wobei für jeweils eines oder beide der Verstellelemente (2, 3) die auf der dem optischen Element abgewandten Seite des entsprechenden Verstellelementes befindlichen Elemente aus Basiselement (1) und erstem Verstellelement (2) zumindest zwei Bohrungen (9a, 9b, 10a, 10b) aufweisen, durch welche jeweils ein Stellelement, vorzugsweise eine Schraube, bis zu einer dem optischen Element abgewandten Oberfläche des entsprechenden Verstellelementes (2, 3) führbar ist, mit dem eine Stellkraft auf das entsprechende Verstellelement (2, 3) ausübbar ist, wobei die zwei Bohrungen (12a, 12b, 12c) für das entsprechende Verstellelement (2, 3) auf gegenüberliegenden Seiten des mit diesem Verstellelement (2, 3) verbundenen Festkörpergelenks (4, 5) angeordnet sind.

11. Halterung nach einem der vorhergehenden Ansprüche, wobei eines oder beide der Festkörpergelenke (4, 5) so ausgestaltet und angeordnet sind, dass die durch das entsprechende Festkörpergelenk (4, 5) verbundenen Elemente bei Abwesenheit äußerer Kräfte so orientiert sind, dass ihre Symmetrieachsen (18), um die sie zumindest bereichsweise eine Rotationssymmetrie um zumindest einen Winkel aufweisen, auf einer gemeinsamen Geraden liegen.

12. Halterung nach einem der vorhergehenden Ansprüche, wobei zumindest eines, vorzugsweise alle der Elemente als Drehteile hergestellt sind, wobei die Drehachse (18) mit der Symmetrieachse zusammenfällt.

13. Halterung nach einem der vorhergehenden Ansprüche, wobei das Basiselement (1) an seiner dem optischen Bauteil abgewandten Seite einen über dem Körper des Basiselementes (1) hinausstehenden Flansch (7) aufweist, der vorzugsweise von einem äußeren Rand mit einer Nut (8) eingeschnitten ist.

14. Halterung nach einem der vorhergehenden Ansprüche, wobei eine den entsprechenden Spalt (16, 17) begrenzende Spaltfläche eines der Elemente oder beider an den entsprechenden Spalt (16, 17) grenzenden Elemente eine Vertiefung aufweisen und das entsprechende Festkörpergelenk (4, 5) mit dem entsprechenden Element am tiefsten Punkt der Vertiefung verbunden ist.

15. Verfahren zur Herstellung einer Halterung für ein optisches Bauteil nach einem der vorhergehenden Ansprüche, wobei die Spalte mittels eines materialabtragenden Verfahrens, vorzugsweise mittels Drahterodieren hergestellt werden.

## Claims

1. A holding means for an optical component, having a base element (1) and at least a first adjustment element (2), wherein
a gap (16) is formed between the base element (1) and the first adjustment element (2), which gap (16) is bounded by facing surfaces of the two elements (1, 2), **characterised in that** the base element (1) and the at least one adjustment element (2) are connected to one another via at least one first flexure joint (4), and **in that** the gap is penetrated by the first flexure joint (4),
wherein a centre of rotation (15) of the flexure joint (4) intersects an axis of symmetry (18) about which at least regions of the base element (1) and/or the first adjustment element (2) have rotational symmetry about at least one angle.

2. A holding means according to the preceding claim, **characterised by** at least one further adjustment element (3) which is connected to the first adjustment element (2) via at least one further flexure joint (5),
wherein between the first adjustment element (2) and the further adjustment element (3) there is formed a gap (17) in which the further flexure joint (5) is arranged,
wherein a centre of rotation of the further flexure joint (5) intersects an axis of symmetry (18) about which at least regions of the first adjustment element (2) and/or the further adjustment element (3) have rotational symmetry about at least one angle.

3. A holding means according to any one of the preceding claims, wherein the at least one flexure joint (4, 5) is in the form of a surface intersected by the axis of symmetry.

4. A holding means according to the preceding claim, wherein the surface is parallel to the corresponding axis of symmetry (18) or perpendicular to the corresponding axis of symmetry (18).

5. A holding means according to claim 3 or 4, wherein the surface of the flexure joint (5, 6) extends perpendicular to the axis of symmetry over an entire extension of the corresponding gap (16, 17) in a longitudinal direction of the surface.

6. A holding means according to any one of the preceding claims, wherein the first flexure joint (4) is in a material connection with the base element (1) and/or the first adjustment element (2) and/or in that the further flexure joint (5) is in a material connection with the first adjustment element (2) and/or the further adjustment element (3).

7. A holding means according to any one of the preceding claims, wherein the first (2) or optionally the further adjustment element (3) is a holding element for an optical element.

8. A holding means according to the preceding claim, wherein the holding element has a surface (6), remote from the base element (1), which is inclined relative to the axis of symmetry by an angle greater than 0° and less than 90°, wherein preferably the centre of rotation (15) of the flexure joint (4, 5) connected to this holding element runs parallel to this inclined surface (6) and wherein particularly preferably the inclined surface contacts at its edge with an edge of a gap surface, bounding the gap (16, 17) of the holding element.

9. A holding means according to any one of the preceding claims, wherein the gaps (16, 17) are dimensioned such that upon adjustment of the corresponding adjustment elements (2, 3) about the corresponding flexure joint (4, 5), gap surfaces bounding the corresponding gap (16, 17) impact against one another before an elastic limit of the corresponding flexure joint (4, 5) is reached.

10. A holding means according to any one of the preceding claims, wherein for in each case one or both of the adjustment elements (2, 3), the elements which are located on the side of the corresponding adjustment element remote from the optical element and which are formed of base element (1) and first adjustment element (2) have at least two bores (9a, 9b, 10a, 10b) through which in each case an adjusting element, preferably a screw, can be passed as far as a surface, remote from the optical element, of the corresponding adjustment element (2, 3) and can exert an adjustment force upon the corresponding adjustment element (2, 3), wherein the two bores (12a, 12b, 12c) for the corresponding adjustment element (2, 3) are arranged on opposite sides of the flexure joint (4, 5) connected to this adjustment element (2, 3).

11. A holding means according to any one of the preceding claims, wherein one or both of the flexure joints (4, 5) are fashioned and arranged in such a manner that the elements connected by the corresponding flexure joint (4, 5) are, in the absence of external forces, oriented in such a manner that their axes of symmetry (18), about which at least regions of the elements have rotational symmetry about at least one angle, lie on a common straight line.

12. A holding means according to any one of the preceding claims, wherein at least one, preferably all, of the elements is/are manufactured as pivoted parts, wherein the rotational axis (18) coincides with the axis of symmetry.

13. A holding means according to any one of the preceding claims, wherein the base element (1) has, at its side remote from the optical component, a flange (7) projecting beyond the body of the base element (1), which flange (7) preferably has a notch (8) cut into it from an outer edge.

14. A holding means according to any one of the preceding claims, wherein a gap surface, bounding the corresponding gap (16, 17), of one of the elements or both elements bordering the corresponding gap (16, 17) has a recess and the corresponding flexure joint (4, 5) is connected to the corresponding element at the deepest point of the recess.

15. A process for manufacturing a holding means for an optical component according to any one of the preceding claims, wherein the gaps are manufactured by means of a material-removing process, preferably by means of wire-EDM.

## Revendications

1. Support pour un composant optique avec un élément de base (1) et avec au moins un premier élément de déplacement (2),
un interstice (16) étant constitué entre l'élément de base (1) et le premier élément de déplacement (2) et étant limité par des surfaces des deux éléments (1, 2) tournées l'une vers l'autre, **caractérisé en ce que**
l'élément de base (1) et l'au moins un élément de déplacement (2) sont raccordés l'un à l'autre par le biais d'au moins une première articulation à corps solide (4),
et **en ce que** l'interstice est interrompu par la première articulation à corps solide (4),
un pôle de rotation (15) de l'articulation à corps solide (4) coupant un axe de symétrie (18) autour duquel l'élément de base (1) et/ou le premier élément de déplacement (2) présentent au moins par tronçons une symétrie de rotation autour d'au moins un angle.

2. Support selon la revendication précédente, **caractérisé par** au moins un autre élément de déplacement (3) qui est raccordé au premier élément de déplacement (2) par le biais d'au moins une autre articulation à corps solide (5),
un interstice (17) étant constitué entre le premier élément de déplacement (2) et l'autre élément de déplacement (3), interstice dans lequel est disposée l'autre articulation à corps solide (5),
un pôle de rotation de l'autre articulation à corps solide (5) coupant un axe de symétrie (18) autour duquel le premier élément de déplacement (2) et/ou l'autre élément de déplacement (3) présentent au moins par tronçons une symétrie de rotation autour d'au moins un angle.

3. Support selon l'une des revendications précédentes, l'au moins une articulation à corps solide (4, 5) étant constituée en tant que surface qui est coupée par l'axe de symétrie.

4. Support selon la revendication précédente, la surface étant parallèle à l'axe de symétrie (18) correspondant ou étant perpendiculaire à l'axe de symétrie (18) correspondant.

5. Support selon la revendication 3 ou 4,
la surface de l'articulation à corps solide (5, 6) s'étendant sur une extension totale de l'interstice (16, 17) correspondant dans une direction longitudinale de la surface perpendiculairement à l'axe de symétrie.

6. Support selon l'une des revendications précédentes, la première articulation à corps solide (4) étant en liaison de matière avec l'élément de base (1) et/ou le premier élément de déplacement (2), et/ou en ce que l'autre articulation à corps solide (5) est en liaison de matière avec le premier élément de déplacement (2) et/ou l'autre élément de déplacement (3).

7. Support selon l'une des revendications précédentes, le premier (2) ou éventuellement l'autre élément de déplacement (3) étant un élément de support pour un élément optique.

8. Support selon la revendication précédente, l'élément de support présentant une surface (6) éloignée de l'élément de base (1), qui est inclinée par rapport à l'axe de symétrie selon un angle supérieur à 0° et inférieur à 90°, le pôle de rotation (15) de l'articulation à corps solide (4, 5) raccordée à cet élément de support étant de préférence parallèle à cette surface (6) inclinée, et la surface inclinée touchant de façon particulièrement préférée au niveau de son bord un bord d'une surface d'interstice de l'élément de support limitant l'interstice (16, 17).

9. Support selon l'une des revendications précédentes, les interstices (16, 17) étant dimensionnés de telle sorte que, lors du déplacement des éléments de déplacement (2, 3) correspondants autour de l'articulation à corps solide (4, 5) correspondant, des surfaces d'interstice limitant l'interstice (16, 17) correspondant viennent buter l'une contre l'autre avant qu'une limite d'élasticité de l'articulation à corps solide (4, 5) correspondante soit atteinte.

10. Support selon l'une des revendications précédentes, dans lequel, pour respectivement un ou pour les deux éléments de déplacement (2, 3), les éléments composés de l'élément de base (1) et du premier élément de déplacement (2) et situés sur le côté de l'élément de déplacement correspondant éloigné de l'élément optique présentent au moins deux alésages (9a, 9b, 10a, 10b) à travers lesquels respectivement un élément de réglage, de préférence une vis, peut être guidé jusqu'à une surface de l'élément de déplacement (2, 3) correspondant qui est éloignée de l'élément optique, élément de réglage avec lequel une force de réglage peut être exercée sur l'élément de déplacement (2, 3) correspondant, les deux alésages (12a, 12b, 12c) pour l'élément de déplacement (2, 3) correspondant étant disposés sur des côtés opposés de l'articulation à corps solide (4, 5) raccordée à cet élément de déplacement (2, 3).

11. Support selon l'une des revendications précédentes, une ou les deux articulations à corps solide (4, 5) étant constituées et disposées de telle sorte que les éléments raccordés par l'articulation à corps solide (4, 5) correspondante sont, en l'absence de forces extérieures, orientés de telle sorte que leurs axes de symétrie (18) autour duquel ils présentent au moins par tronçons une symétrie de rotation autour d'au moins un angle sont situés sur une droite commune.

12. Support selon l'une des revendications précédentes, au moins un, de préférence tous les éléments étant réalisés en tant que pièces rotatives, l'axe de rotation (18) coïncidant avec l'axe de symétrie.

13. Support selon l'une des revendications précédentes, l'élément de base (1) présentant, sur son côté éloigné du composant optique, une bride (7) qui dépasse du corps de l'élément de base (1) et qui est entaillée d'une rainure (8) de préférence partant d'un bord extérieur.

14. Support selon l'une des revendications précédentes, une surface d'interstice, limitant l'interstice (16, 17) correspondant, d'un des éléments ou de deux éléments jouxtant l'interstice (16, 17) correspondant présentant un creux, et l'articulation à corps solide (4, 5) correspondante étant raccordée à l'élément correspondant au point le plus profond du creux.

15. Procédé de fabrication d'un support pour un composant optique selon l'une des revendications précédentes, les interstices étant réalisés au moyen d'un procédé par enlèvement de matière, de préférence au moyen de l'électroérosion.
